# EUROPÄISCHE PATENTSCHRIFT

(11) **EP 2 750 962 B1**
(45) Veröffentlichungstag und Bekanntmachung des Hinweises auf die Patenterteilung: **09.12.2015**
(21) Anmeldenummer: 12769033.7
(22) Anmeldetag: 29.08.2012
(51) Int. Cl.: B60W 30/06, B62D 15/02

(54) **VERFAHREN ZUM DURCHFÜHREN EINES PARKVORGANGS EINES FAHRZEUGS SOWIE FAHRERASSISTENZEINRICHTUNG**
METHOD FOR PERFORMING A PARKING PROCESS FOR A VEHICLE AND DRIVER ASSISTANCE DEVICE
PROCÉDÉ DE RÉALISATION D'UNE MAN UVRE DE STATIONNEMENT D'UN VÉHICULE ET DISPOSITIF D'AIDE À LA CONDUITE

(30) Priorität: 01.09.2011 DE 102011112149
(43) Veröffentlichungstag der Anmeldung: 09.07.2014
(73) Patentinhaber: Valeo Schalter und Sensoren GmbH, 74321 Bietigheim-Bissingen (DE)
(72) Erfinder: JECKER, Nicolas, 73730 Esslingen (DE); GRIMM, Oliver, 74223 Flein (DE)
(86) Internationale Anmeldenummer: PCT/EP2012/066773
(87) Internationale Veröffentlichungsnummer: WO 2013/030231

(56) Entgegenhaltungen:
- EP-A1- 2 261 084
- EP-A2- 0 849 144
- EP-A2- 2 289 768
- WO-A1-2005/009787

## Beschreibung

Die Erfindung betrifft ein Verfahren zum Durchführen eines Parkvorgangs eines Fahrzeugs, bei welchem der Parkvorgang zumindest semiautonom durchgeführt wird. Des Weiteren betrifft die Erfindung eine Parkassistenzeinrichtung für ein Fahrzeug als auch ein Fahrzeug mit einer derartigen Parkassistenzeinrichtung.

Es sind Parkassistenzeinrichtungen für Fahrzeuge bekannt, welche einen semiautonomen Parkvorgang durchführen können. Bei diesen wird nur eine automatische Betätigung der Lenkung durchgeführt, das Bremsen und Gasgeben muss jedoch von dem Fahrzeugführer selbst durchgeführt werden. Darüber hinaus sind Parkassistenzeinrichtungen bekannt, die zum Unterschied dazu nur einen autonomen Parkvorgang durchführen können, was bedeutet, dass neben der automatischen Betätigung der Lenkung auch eine automatische Betätigung der Bremse und das Gasgeben erfolgt.

Bei diesen bekannten Parkeinrichtungen wird nur pauschal eine Möglichkeit angeboten, was aufgrund der Vielzahl der unterschiedlichen Gegebenheiten bei Parkvorgängen nachteilig ist und zu suboptimalen Parkvorgängen führen kann.

Aus der DE 10 2005 038 524 A1 ist ein Verfahren zur Ermittlung der Tiefenbegrenzung der Parklücke mittels Ultraschallsensoren bekannt.

Der nächstliegende Stand der Technik ist in der EP2289768 A2 zu sehen.

Es ist Aufgabe der vorliegenden Erfindung, ein Verfahren, eine Fahrerassistenzeinrichtung sowie ein Fahrzeug zu schaffen, mit welchem bzw. bei welchem ein Parkvorgang situationsangepasster durchgeführt werden kann.

Diese Aufgabe wird durch ein Verfahren, eine Fahrerassistenzeinrichtung und ein Fahrzeug gemäß den unabhängigen Ansprüchen gelöst.

Bei einem erfindungsgemäßen Verfahren zum Durchführen eines Parkvorgangs eines Fahrzeugs wird der Parkvorgang zumindest semiautonom durchgeführt. Eine Parkassistenzeinrichtung des Fahrzeugs kann sowohl einen autonomen Parkvorgang als auch einen semiautonomen Parkvorgang durchführen. Abhängig von Umgebungsbedingungen des Fahrzeugs wird durch die Parkassistenzeinrichtung entschieden, ob ein Parkvorgang autonom oder semiautonom durchgeführt wird. Es wird also ein Verfahren bereitgestellt, bei dem die Parkassistenzeinrichtung grundsätzlich mit zwei verschiedenen Szenarien, nämlich einem autonomen Parkvorgang oder einem semiautonomen Parkvorgang ausgebildet wird. Die Parkassistenzeinrichtung kann somit grundsätzlich sowohl das semiautonome als auch das autonome Durchführen eines Parkvorgangs anbieten. Neben bereits dieser Neuerung wird darüber hinaus auch noch spezifiziert, dass das Verfahren dahingehend intelligent fortgeführt wird, dass situationsabhängig, nämlich abhängig von der momentanen Umgebungsbedingung des Fahrzeugs, ausgewählt wird, wie denn nun letztendlich der Parkvorgang durchgeführt werden soll. Durch eine derartige Vorgehensweise können Parkvorgänge wesentlich bedarfsgerechter und situationsangepasster erfolgen. Das gesamte Parkszenario kann gegebenenfalls schneller und darüber hinaus auch genauer erfolgen.

Vorzugsweise wird vorgesehen, dass für die Entscheidung ein Erkennungswert berücksichtigt wird, welcher die Wahrscheinlichkeit einer korrekten Hinderniserkennung in der Umgebung des Fahrzeugs charakterisiert. Die Entscheidung, ob der Parkvorgang autonom oder semiautonom durchgeführt wird, wird somit auf Basis dieses Erkennungswerts durchgeführt. Somit kann bereits mit sehr hoher Präzision gesagt werden, ob ein gewisses Hindernis, insbesondere die Umgebungsbegrenzung einer Parklücke im Hinblick auf Position und Formgebung der Hindernisse ausreichend genau detektiert werden kann, um dann gegebenenfalls ein autonomes Einparken durchführen zu können.

Vorzugsweise wird für den Erkennungswert ein Schwellwert festgelegt und beim Überschreiten des Schwellwerts wird ein semiautonomer Parkvorgang durchgeführt.

Vorzugsweise wird vorgesehen, dass der Erkennungswert abhängig von Signalstörungen der für die Umgebungserfassung vorgesehenen Sensoren der Parkassistenzeinrichtung, insbesondere Ultraschallsensoren und/oder Streubreiten der Abstandsmessung und/oder ein Störschall von Ultraschallsignalen berücksichtigt wird. Gerade durch diese spezifischen möglichen Fehlerquellen und Ungenauigkeiten werden somit Aussagen gebildet, die den Erkennungswert definieren und auf Basis davon sehr genau eine Entscheidung ermöglichen, wie der Parkvorgang erfolgen soll. Dies immer im Hinblick darauf, dass höchstmögliche Sicherheit beim Parkvorgang gewährleistet ist, andererseits jedoch auch ein sehr genaues und schnelles Durchführen des Parkvorgangs erreicht wird.

Vorzugsweise wird vorgesehen, dass als Umgebungsbedingung ein Hindernis bei einer Parklückenvermessung berücksichtigt wird. Insbesondere werden dabei an eine Parklücke angrenzende Hindernisse bzw. die Parklücke begrenzende Hindernisse berücksichtigt.

Vorzugsweise wird vorgesehen, dass die Entscheidung, ob ein Parkvorgang autonom oder semiautonom durchgeführt wird, auf Basis von Informationen von nur einem Sensortyp zur Umgebungserfassung durchgeführt wird. Es ist somit keine Bündelung von unterschiedlichen Sensortypen bzw. unterschiedlichen Sensortechnologien mehr erforderlich, um eine sehr hohe Zuverlässigkeit erzielen zu können. Insbesondere kann somit die Parkassistenzeinrichtung lediglich mit einem Sensortyp arbeiten, was im Hinblick auch auf die Kosten der Parkassistenzeinrichtung positiv zu bewerten ist und eine kostengünstigere Realisierung ermöglicht.

Vorzugsweise werden nur Informationen von Ultraschallsensoren des Parkassistenzsystems bzw. der Parkassistenzeinrichtung berücksichtigt. Vorzugsweise wird vorgesehen, dass nur für eindeutige Szenarien der autonome Parkvorgang durchgeführt wird. In anderen Szenarien kann dann das semiautonome Einparken oder Ausparken erfolgen.

Insbesondere wird vorgesehen, dass dem Fahrzeugführer auf einer Anzeigeeinheit mitgeteilt wird, wie der Parkvorgang durchgeführt wird. Die Definition der anzubietenden Szenarien kann sich auf die mit der einzeln verwendeten Sensortechnologie erkennbaren Merkmale der Umgebung stützen. Beispielsweise können dies Objektlängen von Hindernissen in der Umgebung und/oder die Anzahl an Objekten bzw. Hindernissen und/oder den bereits genannten Parametern der detektierten Signale sein.

Des Weiteren betrifft die Erfindung eine Fahrerassistenzeinrichtung, insbesondere eine Parkassistenzeinrichtung, für ein Fahrzeug, welche zumindest eine Detektoreinrichtung zur Erfassung der Umgebung aufweist und eine Auswerteeinheit umfasst, welche zur Auswertung der Informationen der Detektoreinrichtung ausgebildet ist. Die Parkassistenzeinrichtung ist zum Durchführen eines autonomen und eines semiautonomen Parkvorgangs ausgebildet, wobei sie dahingehend ausgebildet ist, dass abhängig von detektierten Umgebungsbedingungen des Fahrzeugs entschieden wird, ob ein Parkvorgang autonom oder semiautonom durchgeführt wird.

Vorteilhafte Ausführungen des erfindungsgemäßen Verfahrens sind als vorteilhafte Ausführungen der Parkassistenzeinrichtung anzusehen. Die jeweils folgenden Schritte werden mit den Mitteln der Parkassistenzeinrichtung durchgeführt und abgearbeitet.

Darüber hinaus betrifft die Erfindung auch ein Fahrzeug mit einer erfindungsgemäßen Fahrerassistenzeinrichtung oder einer vorteilhaften Ausgestaltung davon.

Ein Ausführungsbeispiel der Erfindung wird nachfolgend anhand schematischer Zeichnungen näher erläutert.

Es zeigen:
- Fig. 1: eine Draufsicht auf ein Szenario, bei dem ein autonomer Parkvorgang durchgeführt wird; und
- Fig. 2: eine Draufsicht auf ein Szenario, bei dem lediglich ein semiautonomer Parkvorgang durchgeführt wird.

In den Figuren werden gleiche oder funktionsgleiche Elemente mit den gleichen Bezugszeichen versehen.

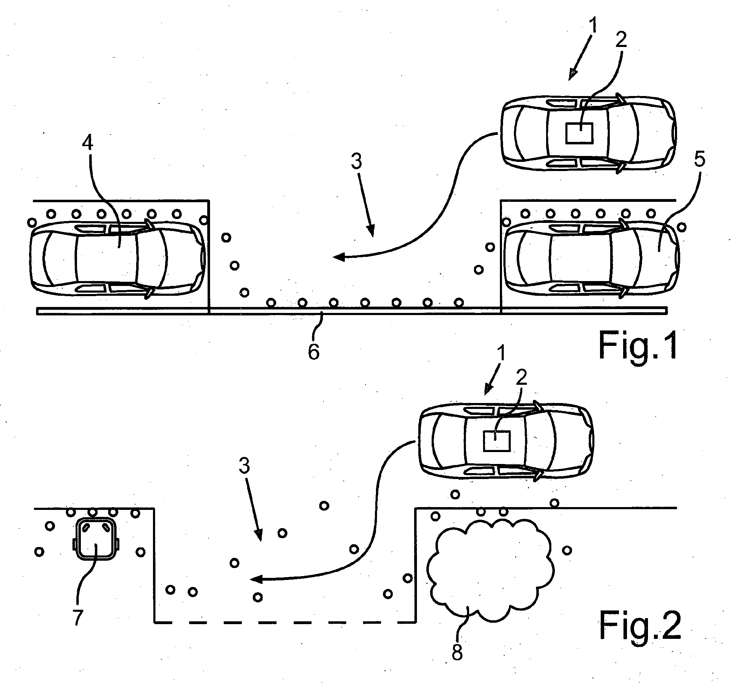

In Fig. 1 ist eine Draufsicht auf ein Szenario gezeigt, bei der ein Fahrzeug 1 mit einer Parkassistenzeinrichtung 2, welche eine Mehrzahl von Ultraschallsensoren aufweist, in eine Parklücke 3 einparken soll. Das Fahrzeug 1 kann gesteuert über die Parkassistenzeinrichtung 2 sowohl einen semiautonomen als auch einen autonomen Parkvorgang durchführen. Abhängig von Umgebungsbedingungen des Fahrzeugs 1 wird durch die Parkassistenzeinrichtung 2, welche neben den Sensoren auch eine Auswerteeinheit umfasst, entschieden, ob der Parkvorgang autonom oder semiautonom durchgeführt wird.

In dem vorliegenden Szenario gemäß Fig. 1 wird durch die Parkassistenzeinrichtung 2 erkannt, dass die Parklücke 3 einerseits ausreicht, um das Fahrzeug 1 darin einzuparken, andererseits ist die Umgebung der Parklücke 3 und insbesondere die die Parklücke 3 begrenzenden Objekte in Form von bereits geparkten Fahrzeugen 4 und 5 als auch einem Randstein 6 ausreichend genau im Hinblick auf Position und Ausgestaltung detektierbar.

Für die Entscheidung, ob der Parkvorgang in die Parklücke 3 autonom oder semiautonom durchgeführt werden soll, wird ein Zuverlässigkeitswert bzw. ein Erkennungswert bestimmt und dieser mit einem abgelegten Schwellwert verglichen. Der Erkennungswert wird insbesondere abhängig von Signalstörungen der für die Umgebungserfassung vorgesehenen Ultraschallsensoren und/oder deren Signalstreubreiten der Abstandsmessung und/oder von Störschall von Ultraschallsensoren bestimmt. Dies wird neben den bereits genannten Messungen im Hinblick auf die Erkennung der die Parklücke 3 begrenzenden Objekte bzw. Hindernisse durchgeführt. Im Ausführungsbeispiel liegt dieser Erkennungswert unter dem Schwellwert und es wird somit durch die Parkassistenzeinrichtung 2 entschieden, dass ein autonomer Parkvorgang durchgeführt wird.

Wie dabei durch die Darstellung in Fig. 1 kenntlich gemacht, charakterisiert sich die Parklücke 3 im Hinblick auf ihre Begrenzungen durch drei lange Objekte, den Fahrzeugen 4 und 5 und dem Randstein 6, die darüber hinaus auch noch ohne Störungen oder mit vernachlässigbaren Störungen detektierbar sind.

In Fig. 2 ist demgegenüber eine Draufsicht auf ein Szenario gezeigt, bei dem eine Parklücke 3 vorne und hinten durch unterschiedliche Objekte bzw. Hindernisse begrenzt ist, wobei dies einerseits beispielsweise eine Mülltonne 7 und ein Baum 8 sind. In der Tiefe zwischen der Mülltonne 7 und dem Baum 8 befindet sich keinerlei weitere Begrenzung, insbesondere auch kein Randstein, wie er in Fig. 1 ausgebildet ist. Darüber hinaus sind gemäß der Darstellung in Fig. 2 im Vergleich zu Fig. 1 relativ viele Störungen, was durch die Punkte dargestellt ist, vorhanden. Bei einem derartigen Szenario ist der Erkennungswert somit über einem Schwellwert und die Parkassistenzeinrichtung 2 entscheidet dahingehend, dass ein Parkvorgang nur semiautonom durchgeführt wird.

## Patentansprüche

1. Verfahren zum Durchführen eines Parkvorgangs eines Fahrzeugs (1), bei welchem der Parkvorgang zumindest semiautonom durchgeführt wird,
**dadurch gekennzeichnet, dass**
eine Parkassistenzeinrichtung (2) des Fahrzeugs einen autonomen Parkvorgang oder einen semiautonomen Parkvorgang durchführen kann und abhängig von Umgebungsbedingungen des Fahrzeugs (1) durch die Parkassistenzeinrichtung (2) entschieden wird, ob ein Parkvorgang autonom oder semiautonom durchgeführt wird.

2. Verfahren nach Anspruch 1,
**dadurch gekennzeichnet, dass**
für die Entscheidung ein Erkennungswert berücksichtigt wird, welcher die Wahrscheinlichkeit einer korrekten Hinderniserkennung in der Umgebung des Fahrzeugs (1) charakterisiert.

3. Verfahren nach Anspruch 2,
**dadurch gekennzeichnet, dass**
für den Erkennungswert ein Schwellwert festgelegt wird, und bei einem Überschreiten des Schwellwerts ein semiautonomer Parkvorgang durchgeführt wird.

4. Verfahren nach Anspruch 2 oder 3,
**dadurch gekennzeichnet, dass**
der Erkennungswert abhängig von Signalstörungen der für die Umgebungserfassung vorgesehenen Sensoren, insbesondere Ultraschallsensoren, und/oder Streubreiten der Abstandsmessung und/oder Störschall von Ultraschallsensoren berücksichtigt werden.

5. Verfahren nach einem der vorhergehenden Ansprüche,
**dadurch gekennzeichnet, dass**
als Umgebungsbedingungen zumindest ein Hindernis bei einer Parklückenvermessung berücksichtigt wird.

6. Verfahren nach Anspruch 5,
**dadurch gekennzeichnet, dass**
an eine Parklücke (3) angrenzende Hindernisse (4 bis 8) berücksichtigt werden.

7. Verfahren nach einem der vorhergehenden Ansprüche,
**dadurch gekennzeichnet, dass**
die Entscheidung, ob ein Parkvorgang autonom oder semiautonom durchgeführt wird, auf Basis von Informationen von nur einem Sensortyp zur Umgebungserfassung durchgeführt wird.

8. Verfahren nach Anspruch 7,
**dadurch gekennzeichnet, dass**
nur Informationen von Ultraschallsensoren der Parkassistenzeinrichtung (2) berücksichtigt werden.

9. Parkassistenzeinrichtung (2) für ein Fahrzeug (1), welche eine Detektoreinrichtung zur Erfassung der Umgebung aufweist, und eine Auswerteeinheit umfasst, welche zur Auswertung der Informationen der Detektoreinrichtung ausgebildet ist, **dadurch gekennzeichnet, dass** die Parkassistenzeinrichtung (2) zum Durchführen eines autonomen und eines semiautonomen Parkvorgangs ausgebildet ist, wobei die Parkassistenzeinrichtung (2) dahingehend ausgebildet ist, dass abhängig von detektierten Umgebungsbedingungen des Fahrzeugs (1) entschieden wird, ob ein Parkvorgang autonom oder semiautonom durchgeführt wird.

10. Fahrzeug (1) mit einer Parkassistenzeinrichtung (2) nach Anspruch 9.

## Claims

1. Method for carrying out a parking process for a vehicle (1), in which the parking process is carried out at least semi-autonomously,
**characterized in that**
a parking assistance device (2) of the vehicle can carry out an autonomous parking process or a semi-autonomous parking process and, depending on environmental conditions of the vehicle (1), the parking assistance device (2) decides whether a parking process is carried out autonomously or semi-autonomously.

2. Method according to Claim 1,
**characterized in that**
a detection value which characterizes the probability of correct obstacle detection in the environment of the vehicle (1) is taken into account for the decision.

3. Method according to Claim 2,
**characterized in that**
a threshold value is stipulated for the detection value and a semi-autonomous parking process is carried out if the threshold value is exceeded.

4. Method according to Claim 2 or 3,
**characterized in that**
the detection value is taken into account on the basis of signal interference in the sensors which are provided for sensing the environment, in particular ultrasonic sensors, and/or tolerance ranges of the distance measurement and/or interference sound from ultrasonic sensors.

5. Method according to one of the preceding claims,
**characterized in that**
at least one obstacle is taken into account as environmental conditions during parking space measurement.

6. Method according to Claim 5,
**characterized in that**
obstacles (4 to 8) adjoining a parking space (3) are taken into account.

7. Method according to one of the preceding claims,
**characterized in that**
the decision as regards whether a parking process is carried out autonomously or semi-autonomously is made on the basis of information from only one sensor type for sensing the environment.

8. Method according to Claim 7,
**characterized in that**
only information from ultrasonic sensors of the parking assistance device (2) is taken into account.

9. Parking assistance device (2) for a vehicle (1), which has a detector device for sensing the environment and comprises an evaluation unit which is designed to evaluate the information from the detector device, **characterized in that** the parking assistance device (2) is designed to carry out an autonomous and a semi-autonomous parking process, the parking assistance device (2) being designed to decide, on the basis of detected environmental conditions of the vehicle (1), whether a parking process is carried out autonomously or semi-autonomously.

10. Vehicle (1) having a parking assistance device (2) according to Claim 9.

## Revendications

1. Procédé pour exécuter une manoeuvre de stationnement d'un véhicule (1), dans lequel la manoeuvre de stationnement est exécutée de manière au moins semi-autonome,
**caractérisé en ce que**
un dispositif (2) d'assistance au stationnement du véhicule peut exécuter une manoeuvre autonome de stationnement ou une manoeuvre semi-autonome de stationnement et
**en ce que** le dispositif (2) d'assistance au stationnement décide si la manoeuvre de stationnement est exécutée de manière autonome ou semi-autonome en fonction des conditions d'environnement du véhicule (1) .

2. Procédé selon la revendication 1, **caractérisé en ce que** la décision tient compte d'une valeur de détection qui caractérise la probabilité d'une détection correcte des obstacles dans l'environnement du véhicule (1).

3. Procédé selon la revendication 2, **caractérisé en ce qu'**une valeur de seuil est définie pour la valeur de détection et **en ce qu'**une manoeuvre de stationnement semi-autonome est réalisée lorsque la valeur de seuil est dépassée.

4. Procédé selon les revendications 2 ou 3, **caractérisé en ce que** la valeur de détection tient compte de perturbations des signaux des capteurs prévus pour la détection de l'environnement, en particulier des capteurs à ultrasons, et/ou des plages d'imprécision de la mesure de distance et/ou des sons parasitant les capteurs à ultrasons.

5. Procédé selon l'une des revendications précédentes, **caractérisé en ce qu'**au moins un obstacle est pris en compte comme conditions de l'environnement lors de la mesure d'un créneau de stationnement.

6. Procédé selon la revendication 5, **caractérisé en ce que** des obstacles (4 à 8) adjacents au créneau de stationnement (3) sont pris en compte.

7. Procédé selon l'une des revendications précédentes, **caractérisé en ce que** la décision de savoir si une manoeuvre de stationnement est exécutée de manière autonome ou semi-autonome est réalisée sur la base d'informations d'un seul type de capteur de détection de l'environnement.

8. Procédé selon la revendication 7, **caractérisé en ce qu'**uniquement des informations de capteurs à ultrasons du dispositif (2) d'assistance au stationnement sont prises en compte.

9. Dispositif (2) d'assistance au stationnement d'un véhicule (1) qui présente un dispositif de détection qui détecte l'environnement et qui présente une unité d'évaluation qui est configurée pour évaluer les informations du dispositif de détection,
**caractérisé en ce que**
le dispositif (2) d'assistance au stationnement est configuré pour exécuter une manoeuvre de stationnement autonome ou semi-autonome et
**en ce que** le dispositif (2) d'assistance au stationnement est configuré de telle sorte qu'il est décidé si la manoeuvre de stationnement est exécutée de manière autonome ou semi-autonome en fonction des conditions détectées de l'environnement du véhicule (1).

10. Véhicule (1) doté d'un dispositif (2) d'assistance au stationnement selon la revendication 9.
